# EUROPÄISCHE PATENTSCHRIFT

(11) **EP 1 463 173 B1**
(45) Veröffentlichungstag und Bekanntmachung des Hinweises auf die Patenterteilung: **23.07.2014**
(21) Anmeldenummer: 03028391.5
(22) Anmeldetag: 11.12.2003
(51) Int. Cl.: H02B 13/035

(54) **Metallgekapselte gasisolierte Schaltanlage**
Metal-clad gas-insulated switchgear
Appareillage de commutation blindé métallique à isolement gazeux

(30) Priorität: 28.03.2003 DE 10314459
(43) Veröffentlichungstag der Anmeldung: 29.09.2004
(73) Patentinhaber: Schneider Electric Energy France, 92500 Rueil-Malmaison (FR)
(72) Erfinder: Starck, Thierry, 93105 Tegernheim (DE); Heinzelmann, Werner, 93051 Regensburg (DE)
(74) Vertreter: DREISS Patentanwälte PartG mbB

(56) Entgegenhaltungen:
- EP-A- 0 678 956
- DE-A- 4 312 620

## Beschreibung

Die Erfindung betrifft eine metallgekapselte gasisolierte Schaltanlage insbesondere für die Mittelspannungstechnik, mit einem Grundbehälter, mit einem Stromwandler, und mit einem Außenkonus-Abgangssystem oder einem Innenkonus-Abgangssystem. Eine derartige Schaltanlage ist aus der EP 678 956 A1 bekannt.

Eine weitere Schaltanlage ist aus der DE 100 41 315 A1 bekannt. Dort ist ein Leistungsschalterraum in einem unteren Bereich angeordnet. In dem Leistungsschalterraum sind der Leistungsschalter und ein Kabelanschluss untergebracht. Der Kabelanschluss kann beispielsweise nach dem Außenkonussystem ausgebildet sein. Wenn es erforderlich ist, die beschriebene Schaltanlage andersartig aufzubauen, wenn beispielsweise der Leistungsschalterraum mit einem Innenkonuskabelanschluss versehen werden muss, so muss die Schaltanlage weitreichend umgebaut werden.

Weiterer Stand der Technik ist aus der DE 43 12 620 A1 bekannt.

Aufgabe der Erfindung ist es, eine Schaltanlage zu schaffen, die ohne größeren Aufwand für unterschiedliche Anwendungen geeignet ist.

Diese Aufgabe wird bei einer Schaltanlage der eingangs genannten Art erfindungsgemäß dadurch gelöst, dass der Grundbehälter mit einer Montage- und Kabelabgangsöffnung versehen ist, die durch das Außenkonus-Abgangssystem oder das Innenkonus-Abgangssystem verschlossen ist, und dass das Außenkonus-Abgangssystem und das Innenkonus-Abgangssystem einen gleichartig ausgebildeten Stromwandler aufweisen.

Mit Hilfe des Außenkonus-Abgangssystems und des Innenkonus-Abgangssystems kann die erfindungsgemäße Schaltanlage ohne weiteres an unterschiedliche Anwendungen angepasst werden. Dabei weisen die beiden Abgangssysteme den weiteren Vorteil auf, dass sie einen gleichartig ausgebildeten Stromwandler aufweisen, der also für beide Abgangssysteme verwendet werden kann. Der Stromwandler ist somit für beide Abgangssysteme austauschbar.

Diese Möglichkeit, einen einzigen Stromwandler für verschiedene Anwendungen zu verwenden, bringt eine wesentliche Kostenreduktion im Hinblick auf verminderte Herstellungskosten, verminderte Lagerhaltungskosten usw. mit sich.

Bei einer vorteilhaften Weiterbildung der Erfindung weisen das Außenkonus-Abgangssystem und das Innenkonus-Abgangssystem eine gleichartig ausgebildete Durchführung auf. Dies führt zu einer weiteren Kostenreduktion bezüglich Herstellung und Lagerhaltung der Durchführung.

Besonders vorteilhaft ist es, wenn die Durchführung einen zylindrischen Bereich aufweist, auf den der Stromwandler aufgesteckt ist.

Bei einer weiteren vorteilhaften Weiterbildung der Erfindung weist die Durchführung einen Befestigungsbereich auf, der durch eine Öffnung des Außenkonus-Abgangssystems oder des Innenkonus-Abgangssystems hindurch gesteckt ist und gasdicht mit diesem verbunden ist. Damit kann die Durchführung gasdicht mit dem jeweiligen Abgangssystem verbunden werden, und zwar unabhängig davon, welches Abgangssystem vorhanden ist.

Bei einer weiteren vorteilhaften Weiterbildung der Erfindung ist bei dem Innenkonus-Abgangssystem eine U-förmige Ausbildung vorgesehen ist, deren Schenkel die dem Befestigungsbereich zugehörige sowie eine weitere Öffnung aufweisen, wobei die Durchführung durch die weitere Öffnung gasdicht hindurch gesteckt ist. Damit wird erreicht, dass der Stromwandler außerhalb des Grundbehälters angeordnet werden kann.

Besonders vorteilhaft ist es, dass sich der Stromwandler bei dem Außenkonus-Abgangssystem, wie auch bei dem Innenkonus-Abgangssystem außerhalb des Grundbehälters und damit in Luft befindet. Damit kann ein einfacher, niederspannungsisolierter Ringkernstromwandler verwendet werden. Weiterhin ist es nicht erforderlich, z.B. die Zuleitungen der Sekundärwicklungen des Stromwandlers mit Hilfe von aufwendigen Durchführungen und Abdichtungen aus dem Inneren des Grundbehälters gasdicht herauszuführen.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

Figur 1a zeigt eine schematische Frontansicht eines Ausführungsbeispiels einer erfindungsgemäßen metallgekapselten gasisolierten Schaltanlage mit Einfachsammelschiene und Außenkonuskabelanschluss,
Figur 1b zeigt eine schematische Seitenansicht der Schaltanlage der Figur 1a,
Figur 2 zeigt eine schematische Seitenansicht einer Abwandlung der Schaltanlage der Figuren 1a und 1b mit Innenkonuskabelanschluss,
Figur 3 zeigt einen schematischen Längsschnitt durch den Außenkonuskabelanschluss der Figur 1a, und
Figur 4 zeigt einen schematischen Längsschnitt durch den Innenkonuskabelanschluss der Figur 2.

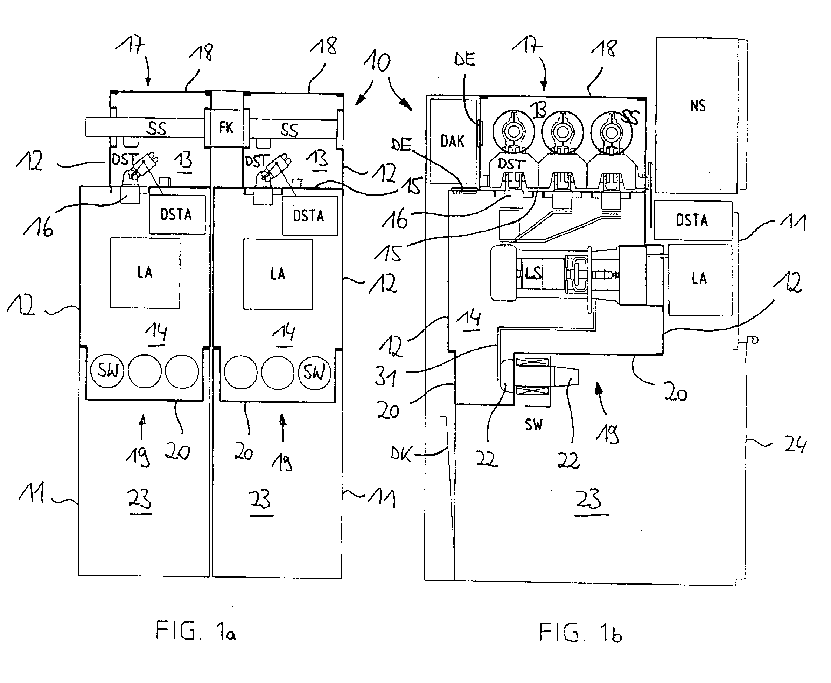

In den Figuren 1a und 1b ist eine metallgekapselte gasisolierte Schaltanlage 10 dargestellt, die insbesondere im Bereich der Mittelspannungstechnik zum Einsatz kommen kann. In der Schaltanlage 10 sind unter anderem ein dreiphasiges Sammelschienensystem mit zugehörigen Leistungsschaltersystemen untergebracht, die zur Umschaltung von elektrischen Strömen bzw. Spannungen vorgesehen sind.

Gemäß der Frontansicht der Figur 1a weist die Schaltanlage 10 zwei Schaltfelder 11 auf, die im wesentlichen identisch aufgebaut und nebeneinander angeordnet sind. Wie noch beschrieben werden wird, sind die beiden Schaltfelder 11 miteinander gekoppelt. Es versteht sich, dass auch noch weitere Schaltfelder 11 vorhanden sein können.

Jedes Schaltfeld 11 weist einen Grundbehälter 12 auf, der mit einem Sammelschienenraum 13 und einem Leistungsschalterraum 14 versehen ist. Der Sammelschienenraum 13 und der Leistungsschalterraum 14 sind im montierten Zustand jeweils für sich gasdicht gekapselt und damit hermetisch voneinander getrennt. Im Betrieb sind der Sammelschienenraum 13 und der Leistungsschalterraum 14 mit einem Isoliergas gefüllt.

In dem Sammelschienenraum 13 sind Sammelschienen SS sowie Dreistellungstrenner DST für die drei Phasen des jeweiligen Schaltfelds 11 untergebracht. Die Sammelschienen SS sind gemäß der Figur 1a etwa horizontal ausgerichtet und gemäß der Figur 1b, von der Frontseite aus gesehen, in einer etwa horizontalen Ebene hintereinander angeordnet. Die Dreistellungstrenner DST sind den Sammelschienen zugeordnet und ebenfalls hintereinander angeordnet. Die Drehebene der Dreistellungstrenner DST ist damit etwa parallel zur Frontseite der Schaltanlage 10.

Die Sammelschienen SS der beiden benachbart angeordneten Schaltfelder 11 sind über in Luft geführte Feldkupplungen FK elektrisch miteinander verbunden. Hierzu ist es möglich, wie dies auch aus der Figur 1a hervorgeht, dass die Breite des Sammelschienenraums 13 kleiner ist als die Breite des Leistungsschalterraums 14. In dem damit freien Bereich können die Feldkupplungen FK angeordnet sein. Die Verbindung mit Hilfe der Feldkupplungen FK kann beispielsweise entsprechend der EP 1 111 748 erfolgen.

In dem Leistungsschalterraum 14 sind Leistungsschalter LS und deren elektrische Zuleitungen für die drei Phasen untergebracht. Gemäß der Figur 1b sind die Leistungsschalter LS etwa horizontal ausgerichtet und, aus einer Seitenansicht gesehen, in einer etwa horizontalen Ebene hintereinander angeordnet.

Der Sammelschienenraum 13 ist oberhalb des Leistungsschalterraums 14 angeordnet. Die beiden Räume 13, 14 sind durch eine Wand 15 gasdicht voneinander getrennt. In der Wand 15 sind Durchführungen 16 enthalten, über die elektrische Zuleitungen von dem Sammelschienenraum 13 zu dem Leistungsschalterraum 14 geführt sind. Die Durchführungen 16 sind gasdicht und fest mit der Wand 15 verbunden.

Die in dem Sammelschieneraum 13 untergebrachten Dreistellungstrenner DST sind derart ausgebildet und angeordnet, dass jeweils eine direkte Verbindung zwischen einem Kontakt der zugehörigen Durchführung 16 und einem Gegenkontakt der Sammelschiene SS möglich ist. Dies ist insbesondere aus der Figur 1a ersichtlich.

Die Wand 15 kann fest in dem Grundbehälter 12 vorhanden, z.B. eingeschweißt sein. Alternativ ist es möglich, dass die Wand 15 lösbar innerhalb des Grundbehälters 12 befestigt ist, z.B. mittels Schrauben und zugehörigen Dichtungen. In letzterem Fall können unterschiedliche Wände 15 zur Realisierung unterschiedlicher Durchführungen 16 verwendet werden, so dass derselbe Grundbehälter 12 bei unterschiedlichen Anwendungsfällen zum Einsatz kommen kann.

Der Grundbehälter 12 ist an der Oberseite des Sammelschienenraums 13 mit einer Montageöffnung 17 versehen. In den Figuren 1a und 1b ist die Montageöffnung 17 mit einer Platte 18 verschlossen. Die Platte 18 ist z.B. mittels Schrauben lösbar ausgebildet und weist Dichtungen für einen gasdichten Abschluss des Sammelschienenraums 13 im montierten Zustand auf.

Bei abgenommener Platte 18 kann über die Montageöffnung 17 insbesondere die Montage der Sammelschienen SS und der Dreistellungstrenner DST innerhalb des Sammelschienenraums 13 erfolgen. In den Figuren 1a und 1b entspricht die Montageöffnung 17 der gesamten Oberseite des Grundbehälters 12. Es versteht sich, dass die Montageöffnung 17 auch kleiner sein kann.

Anstelle der Platte 18 ist es möglich, die Montageöffnung 17 mit Hilfe von unterschiedlichen Sammelschienen-Anbauten gasdicht zu verschließen. Dabei kann es sich um Sammelschienen-Stromwandler, Sammelschienen-Spannungswandler, Sammelschienen-Erder oder dergleichen handeln. Damit kann derselbe Grundbehälter 12 für unterschiedliche Anwendungsfälle verwendet werden.

Der Grundbehälter 12 ist an der Unterseite des Leistungsschalterraums 14 mit einer Montage- und Kabelabgangsöffnung 19 versehen. In den Figuren 1a und 1b ist diese Öffnung 19 mit einem Außenkonus-Abgangssystem 20 verschlossen. Das Abgangssystem 20 weist unter anderem eine Platte oder Wanne auf, ist z.B. mittels Schrauben lösbar ausgebildet und weist Dichtungen für einen gasdichten Abschluss des Leistungsschalterraums 14 im montierten Zustand auf.

Bei abgenommenem Abgangssystem 20 kann über die Öffnung 19 insbesondere die Montage des Leistungsschalters LS innerhalb des Leistungsschalterraums 14 erfolgen. In den Figuren 1a und 1b entspricht die Montage- und Kabelabgangsöffnung 19 der gesamten Unterseite des Grundbehälters 12. Es versteht sich, dass die Öffnung 19 auch kleiner sein kann.

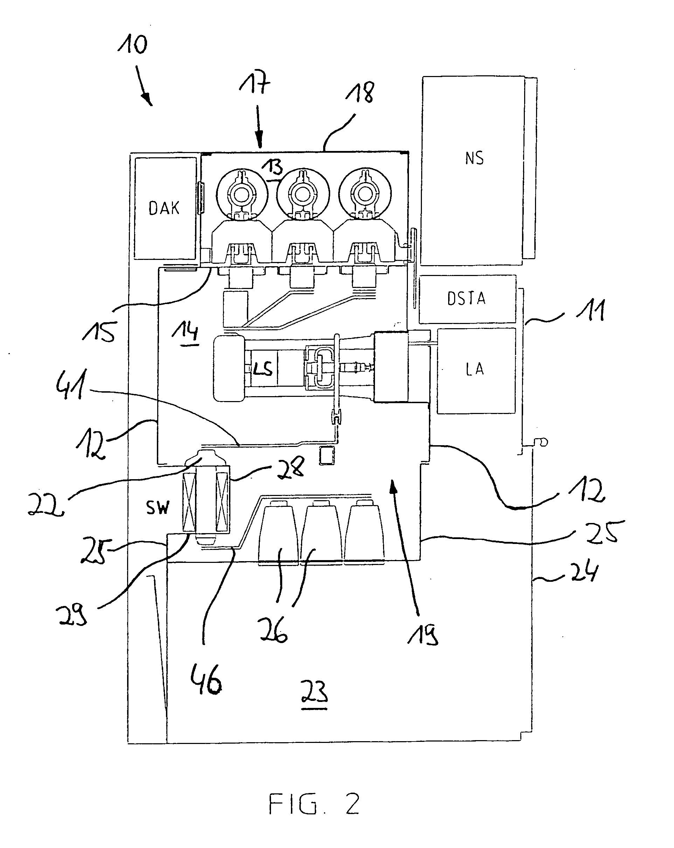

Anstelle des Außenkonus-Abgangssystems 20 ist es möglich, die Montage- und Kabelabgangsöffnung 19 mit Hilfe von unterschiedlichen Anbauten gasdicht zu verschließen. Dabei kann es sich um Innenkonus-Abgangssysteme, sonstige Kabelanschlussdurchführungen, Stromwandler, Spannungswandler, Lichtbogensensoren, Kabelprüfbuchsen oder dergleichen handeln. Dies wird beispielhaft anhand der Figur 2 erläutert werden. Damit kann derselbe Grundbehälter 12 für unterschiedliche Anwendungsfälle verwendet werden.

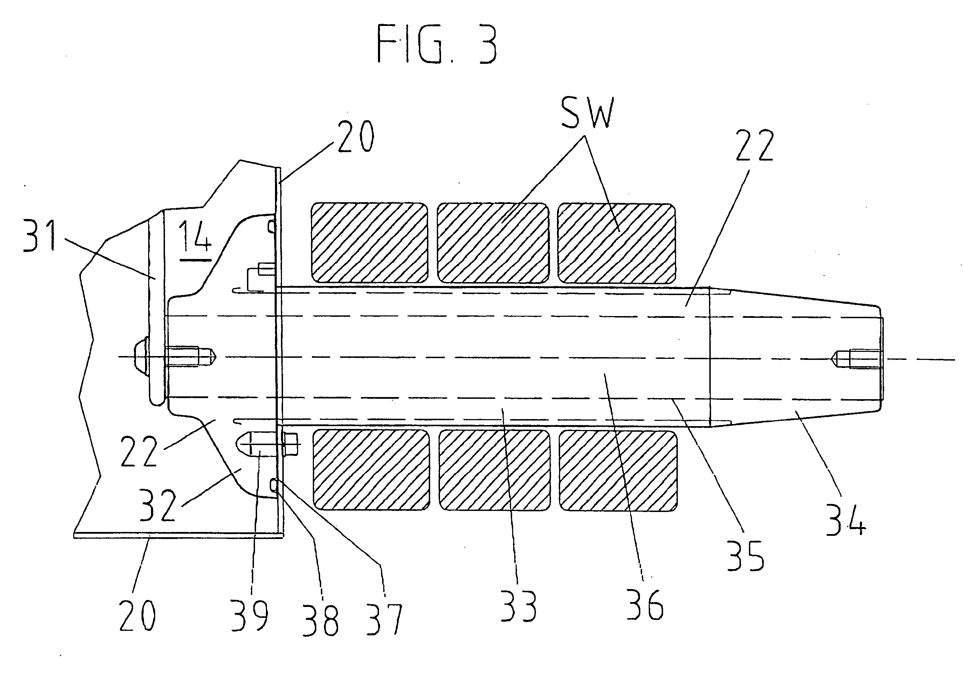

Das Außenkonus-Abgangssystem 20 weist Durchführungen 22 mit zugehörigen Stromwandlern SW für die drei Phasen auf. Ein einzelner derartiger Außenkonuskabelanschluss ist in der Figur 3 dargestellt. Übereinstimmende Merkmale sind dort mit übereinstimmenden Bezugszeichen gekennzeichnet.

Gemäß der Figur 3 ist die Durchführung 22 im wesentlichen rotationssymmetrisch ausgebildet und weist einen Befestigungsbereich 32, einen zylindrischen Bereich 33 und einen konischen Bereich 34 auf. Die Durchführung 22 ist mit einer koaxialen zylindrischen Ausnehmung 35 versehen, in der sich ein elektrischer Leiter 36 befindet. Die Durchführung 22 besteht aus elektrisch isolierendem Material, vorzugsweise aus Gießharz.

Die Durchführung 22 ist mit ihrem Befestigungsbereich 32 durch eine Öffnung des Außenkonus-Abgangssystems 20 hindurch gesteckt und dort gasdicht befestigt. Hierzu ist in dem Befestigungsbereich 32 in der dem Außenkonus-Abgangssystem 20 zugewandten Fläche eine kreisförmige Nut 37 vorhanden, in der sich eine Dichtung 38 befindet. Weiterhin ist der Befestigungsbereich 32 mit eingegossenen Muttern 39 versehen, über die die Durchführung 22 mit dem Außenkonus-Abgangssystem 20 verschraubt ist.

Der Befestigungsbereich 32 befindet sich innerhalb des Leistungsschalterraums 14. Dort ist das freie Ende des elektrischen Leiters 36 mit einer Zuleitung 31 verschraubt, die gemäß der Figur 1b zu dem Leistungsschalter LS führt.

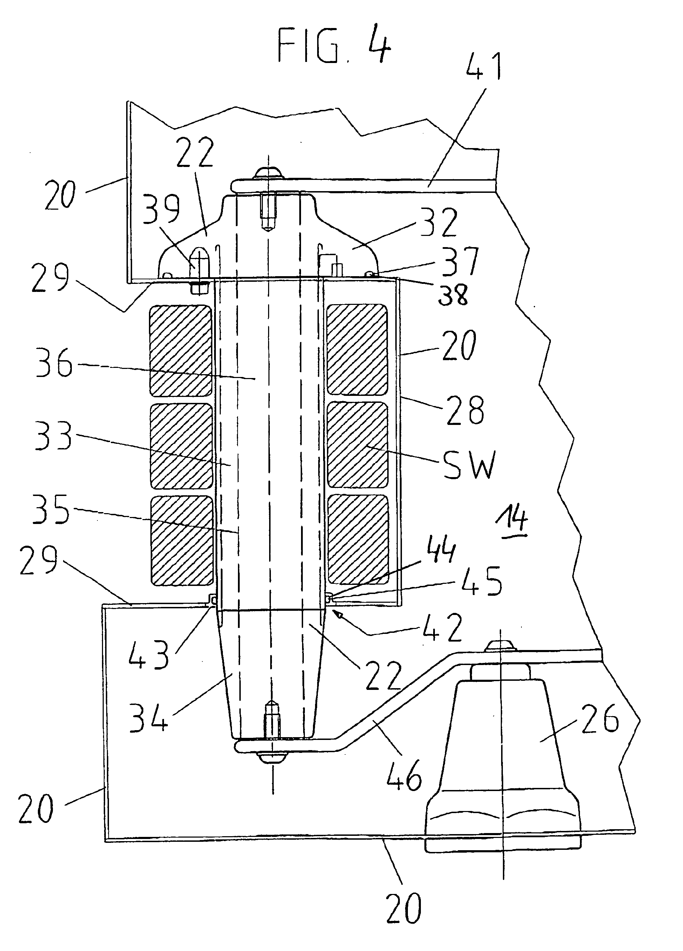

Die Oberfläche des zylindrischen Bereichs 33 kann mit einer metallisierten Schicht versehen sein, die geerdet ist. Dies ist in der Figur 3 gestrichelt angedeutet. Alternativ ist es möglich, dass etwa in dem zylindrischen Bereich 33 ein Feldsteuergitter vorhanden ist, wie dies in der Figur 4 gestrichelt angedeutet ist.

Auf den zylindrischen Bereich 33 der Figur 3 sind der oder die Stromwandler SW aufgesteckt. Die Stromwandler SW sind als Ringkernwandler ausgebildet, deren Primärleiter der elektrische Leiter 36 ist. Die Stromwandler SW befinden sich außerhalb des Grundbehälters 12 und somit in Luft. Die Zuleitungen zu den nicht-dargestellten Sekundärwicklungen der Stromwandlern SW sind damit in Luft geführt und müssen nicht in einen gasdichten Raum eingeleitet werden.

Der konische Bereich 34 der Durchführung 22 stellt ein Anschlussteil nach dem Außenkonussystem dar. Auf diesen konischen Bereich 34 kann ein Außenkonus-Kabelstecker aufgesteckt und verschraubt werden.

Auf dem dem konischen Bereich 34 zugewandten Ende des zylindrischen Bereichs 33 kann ein Halteblech oder dergleichen vorgesehen sein, durch das die Durchführung 22 hindurch gesteckt ist, und das an dem Außenkonus-Abgangssystem 20 befestigt ist. Das Halteblech dient zur Fixierung der Durchführung 22, wie dies in der Figur 1b gezeigt ist.

Gemäß der Figur 1b sind die Stromwandler SW und die Durchführungen 22 etwa horizontal ausgerichtet. Gemäß der Figur 1a sind die Stromwandler SW, von der Frontseite aus gesehen, in einer etwa horizontalen Ebene nebeneinander angeordnet.

Unterhalb des Grundbehälters 12 und damit unterhalb des Leistungsschalterraums 14 weist jedes Schaltfeld 11 einen Kabelanschluss- oder Abgangsraum 23 auf. In diesem Abgangsraum 23 befinden sich die vorgenannten Stromwandler SW und der konusförmige Bereich 34 der Durchführungen 22. Der Abgangsraum 23 ist nicht gasdicht verschlossen und ist über eine steckbare Blende oder Tür 24 von der Frontseite des jeweiligen Schaltfelds 11 zugänglich.

Der Abgangsraum 23 dient dazu, den jeweils verwendeten Anbauten, mit denen die Montage- und Kabelabgangsöffnung 19 verschlossen ist, also beispielsweise dem Außenkonus-Abgangssystem 20, den erforderlichen Raum für die jeweils vorhandenen Bauteile zur Verfügung zu stellen. Ebenfalls sind in dem Abgangsraum 23 die Abgangskabel des jeweiligen Schaltfelds 11 geführt, beispielsweise zu einem im Boden verlegten Kabelkanal. Weiterhin können in dem Abgangsraum 23 auch noch weitere elektrische Bauteile des jeweiligen Schaltfelds 11 untergebracht werden.

Der Grundbehälter 12 ist an nicht-dargestellten Trageinrichtungen des jeweiligen Schaltfelds 11 befestigt. An diesen Trageinrichtungen sind auch die Tür 24 an der Frontseite, weitere Abdeckplatten der Frontseite sowie Rückwand-Abdeckplatten oder dergleichen angebracht.

Weiterhin ist in jedem Schaltfeld 11 ein Dreistellungstrennerantrieb DSTA, ein Leistungsschalterantrieb LA, ein Niederspannungsschrank NS sowie gegebenenfalls ein Druckentlastungskanal DAK vorhanden.

Der Dreistellungstrennerantrieb DSTA und der Leistungsschalterantrieb LA sind außerhalb des Grundbehälters 12 im Bereich der Frontseite des jeweiligen Schaltfelds 11 und, von der Frontseite aus gesehen, etwa vor dem Leistungsschalterraum 14 des Grundbehälters 12 angeordnet. Über gasdichte Durchführungen sind der Dreistellungstrennerantrieb DSTA und der Leistungsschalterantrieb LA mit den Dreistellungstrennern DST und den Leistungsschaltern LS mechanisch gekoppelt.

Der Niederspannungsschrank NS ist außerhalb des Grundbehälters 12 im Bereich der Frontseite des jeweiligen Schaltfelds 11 und, von der Frontseite aus gesehen, etwa vor dem Sammelschienenraum 13 des Grundbehälters angeordnet. In dem Niederspannungsschrank NS sind unter anderem elektrische Schaltungen oder Geräte zur Steuerung des jeweiligen Schaltfelds 11 bzw. der Schaltanlage 10 untergebracht.

Der Druckentlastungskanal DAK ist außerhalb des Grundbehälters 12 im Bereich der Rückseite des jeweiligen Schaltfelds 11 und, von der Frontseite aus gesehen, etwa hinter dem Sammelschienenraum 13 des Grundbehälters 12 angeordnet. Dabei ist es möglich, dass, von der Frontseite aus gesehen, der Sammelschienenraum 13 eine geringere Tiefe aufweist als der Leistungsschalterraum 14, und dass deshalb der Leistungsschalterraum 14 über den Sammelschienenraum 13 nach hinten übersteht. Dieser überstehende Bereich kann dann von dem Druckentlastungskanal DAK ausgefüllt werden. Der Druckentlastungskanal DAK erstreckt sich über die gesamte Rückseite der vorhandenen Schaltfelder 11 und damit über die gesamte Rückseite der Schaltanlage 10.

Gemäß der Figur 1b weist der Sammelschienenraum 13 eine, von der Frontseite aus gesehen, nach hinten gerichtete Druckentlastungseinrichtung DE auf. Wie ebenfalls der Figur 1b zu entnehmen ist, weist der Leistungsschalterraum 14 eine nach oben gerichtete Druckentlastungseinrichtung DE auf. Über diese Druckentlastungseinrichtungen DE ist der Druckentlastungskanal DAK mit dem Sammelschienenraum 13 und dem Leistungsschalterraum 14 gekoppelt.

Der Abgangsraum 23 weist auf seiner Rückseite eine Druckentlastungsklappe DK auf, die über einen an der Rückseite des Schaltfelds 11 vorhandenen Zwischenraum mit dem Druckentlastungskanal DAK verbunden ist.

Damit ist es möglich, dass im Betrieb der Schaltanlage 10 bei einem Störfall entstehendes heißes Isoliergas über den Druckentlastungskanal DAK aus dem jeweiligen Schaltfeld 11 herausgeführt wird.

In der Figur 2 ist eine Abwandlung der Schaltanlage 10 der Figuren 1a und 1b dargestellt. Übereinstimmende Bauteile sind mit übereinstimmenden Bezugszeichen gekennzeichnet.

Anstelle des Außenkonus-Abgangssystems 20 der Figuren 1a und 1b ist in der Figur 2 ein Innenkonus-Abgangssystem 25 vorgesehen. Das Abgangssystem 25 weist unter anderem eine Platte oder Wanne auf, ist z.B. mittels Schrauben lösbar ausgebildet und weist Dichtungen für einen gasdichten Abschluss des Leistungsschalterraums 14 im montierten Zustand auf.

Das Innenkonus-Abgangssystem 25 weist Durchführungen 22 mit zugehörigen Stromwandlern SW und zugehörigen Steckbuchsen 26 nach dem Innenkonussystem für die drei Phasen auf. Ein einzelner derartiger Innenkonuskabelanschluss ist in der Figur 4 dargestellt. Übereinstimmende Merkmale sind dort mit übereinstimmenden Bezugszeichen gekennzeichnet.

Die in der Figur 4 gezeigte Durchführung 22 stimmt in ihrem Aufbau mit der Durchführung 22 der Figur 3 überein. Wie bereits erwähnt wurde, ist in der Figur 4 nur anstelle der metallisierten Schicht ein eingegossenes Feldsteuergitter im zylindrischen Bereich 33 der Durchführung 22 vorgesehen.

Das Innenkonus-Abgangssystem 25 weist eine U-förmige Ausbildung 28, 29 seiner wannenförmigen Gestalt auf, die in ihren beiden Schenkeln 29 mit zwei zueinander koaxial ausgerichteten Öffnungen versehen ist. Durch diese beiden Öffnungen ist die Durchführung 22 hindurch gesteckt. In ihrem Befestigungsbereich 32 ist die Durchführung 22 in derselben Weise gasdicht an dem Abgangssystem 25 befestigt, wie dies bereits im Zusammenhang mit der Figur 3 erläutert wurde.

Der Befestigungsbereich 32 der Durchführung 22 der Figur 4 befindet sich innerhalb des Leistungsschalterraums 14. Dort ist das freie Ende des elektrischen Leiters 36 mit einer Zuleitung 41 verschraubt, die gemäß der Figur 2 zu dem Leistungsschalter LS führt.

Auf den zylindrischen Bereich 33 der Durchführung 22 der Figur 4 sind der oder die Stromwandler SW aufgesteckt. Die Stromwandler SW sind als Ringkernwandler ausgebildet, deren Primärleiter der elektrische Leiter 36 ist. Die Stromwandler SW befinden sich im Bereich der U-förmigen Ausbildung 28, 29 außerhalb des Leistungsschalterraums 14 und somit in Luft. Die Zuleitungen zu den nicht-dargestellten Sekundärwicklungen der Stromwandlern SW sind damit in Luft geführt und müssen nicht in einen gasdichten Raum eingeleitet werden.

An derjenigen Öffnung des Innenkonus-Abgangssystems 25, die dem Befestigungsbereich 32 der Durchführung 22 gegenüberliegt, ist das Abgangssystem 25 mit einer Dichteinrichtung 42 versehen. Diese Dichteinrichtung 42 weist einen Flansch 43 auf, der am Rand der Öffnung angeordnet ist. Der Flansch 43 ist auf seiner der Durchführung 22 zugewandten Seite mit einer kreisförmigen Nut 44 versehen, in der eine Dichtung 45 vorhanden ist. Mit dieser Dichteinrichtung 42 ist die Durchführung 22 mit ihrem zylindrischen Bereich 33 gasdicht durch das Innenkonus-Abgangssystem 25 hindurch gesteckt.

An dem freien Ende der Durchführung 22 ist eine Zuleitung 46 mit dem elektrischen Leiter 36 verschraubt, die zu der bzw. zu den in der Figur 4 gezeigten, parallel geschalteten Steckbuchsen 26 führt. Der konische Bereich 34 der Durchführung 22 hat bei der Figur 4 die Funktion, den notwendigen Abstand des spannungsführenden Leiters 46 zu dem geerdeten Schenkel 29 des Innenkonus-Abgangssystems 25 herzustellen. Die Steckbuchse 26 stellt ein Anschlussteil nach dem Innenkonussystem dar, in das ein Innenkonus-Kabelstecker eingesteckt werden kann.

Der zylindrische Bereich 33 der Durchführung 22 zusammen mit den Stromwandlern SW befindet sich außerhalb des Grundbehälters 12. Die Steckbuchse 26 ist nach unten ausgerichtet und gasdicht an dem Innenkonus-Abgangssystem 25 befestigt, so dass die Einstecköffnung der Steckbuchse 26 von außen zugänglich ist. Die Stromwandler SW und die Einstecköffnungen der Steckbuchsen 26 befinden sich damit außerhalb des Grundbehälters 12 und somit in Luft.

Gemäß der Figur 2 sind die Stromwandler SW und Steckbuchsen 26 etwa vertikal ausgerichtet. Weiterhin sind die Stromwandler SW, von der Frontseite aus gesehen, in einer etwa vertikalen Ebene nebeneinander angeordnet. Die Steckbuchsen 26 sind, von der Frontseite aus gesehen, in einer etwa vertikalen Ebene hintereinander angeordnet.

Wie bereits erwähnt wurde, stimmt die Durchführung 22 des Außenkonus-Abgangssystems 20 der Figur 3 mit der Durchführung 22 des Innenkonus-Abgangssystems 25 der Figur 4 überein. Entsprechend sind der oder die Stromwandler SW des Außenkonus-Abgangssystems 20 und der oder die Stromwandler SW des Innenkonus-Abgangssystems 25 gleichartig ausgebildet und damit austauschbar. Die vorgenannten Bauteile sind somit für beide Abgangssysteme 20, 25 einsetzbar.

## Patentansprüche

1. Metallgekapselte gasisolierte Schaltanlage (10) insbesondere für die Mittelspannungstechnik, mit einem Grundbehälter (12), mit einem Stromwandler (SW), und mit einem Außenkonus-Abgangssystem (20) oder einem Innenkonus-Abgangssystem (25), **dadurch gekennzeichnet, dass** der Grundbehälter (12) mit einer Montage- und Kabelabgangsöffnung (19) versehen ist, die durch das Außenkonus-Abgangssystem (20) oder das Innenkonus-Abgangssystem (25) verschlossen ist, und dass das Außenkonus-Abgangssystem (20) und das Innenkonus-Abgangssystem (25) einen gleichartig ausgebildeten Stromwandler (SW) aufweisen.

2. Schaltanlage (10) nach Anspruch 1, **dadurch gekennzeichnet, dass** das Außenkonus-Abgangssystem (20) und das Innenkonus-Abgangssystem (25) eine gleichartig ausgebildete Durchführung (22) aufweisen.

3. Schaltanlage (10) nach Anspruch 2, **dadurch gekennzeichnet, dass** die Durchführung (22) einen zylindrischen Bereich (33) aufweist, auf den der Stromwandler (SW) aufgesteckt ist.

4. Schaltanlage (10) nach einem der Ansprüche 2 oder 3, **dadurch gekennzeichnet, dass** die Durchführung (22) einen Befestigungsbereich (32) aufweist, der durch eine Öffnung des Außenkonus-Abgangssystems (20) oder des Innenkonus-Abgangssystems (25) hindurch gesteckt ist und gasdicht mit diesem verbunden ist.

5. Schaltanlage (10) nach einem der Ansprüche 2 bis 4, **dadurch gekennzeichnet, dass** bei dem Außenkonus-Abgangssystem (20) ein Halteblech oder dergleichen mit einer Öffnung vorgesehen ist, durch das die Durchführung (22) hindurch gesteckt ist.

6. Schaltanlage (10) nach einem der Ansprüche 2 bis 4, **dadurch gekennzeichnet, dass** bei dem Innenkonus-Abgangssystem (25) eine U-förmige Ausbildung (28, 29) vorgesehen ist, deren Schenkel (29) die dem Befestigungsbereich (32) zugehörige sowie eine weitere Öffnung aufweisen, wobei die Durchführung (22) durch die weitere Öffnung gasdicht hindurch gesteckt ist.

7. Schaltanlage (10) nach einem der Ansprüche 2 bis 6, **dadurch gekennzeichnet, dass** die Durchführung (22) einen konischen Bereich (34) aufweist, auf den ein Außenkonus-Kabelstecker aufsteckbar ist.

8. Schaltanlage (10) nach einem der Ansprüche 1 bis 7, **dadurch gekennzeichnet, dass** sich der Stromwandler (SW) bei dem Außenkonus-Abgangssystem (20), wie auch bei dem Innenkonus-Abgangssystem (25) außerhalb des Grundbehälters (12) und damit in Luft befindet.

## Claims

1. A metal-clad gas-insulated switchgear (10), in particular for medium-high-voltage technology, having a basic container (12), having a current transformer (SW), and having an outer-cone outlet system (20) or an inner-cone outlet system (25), **characterized in that** the basic container (12) is provided with a mounting and cable outlet opening (19), which is closed by the outer-cone outlet system (20) or the inner-cone outlet system (25), and that the outer-cone outlet system (20) and the inner-cone outlet system (25) have an identically embodied current transformer (SW).

2. The switchgear (10) of claim 1, **characterized in that** the outer-cone outlet system (20) and the inner-cone outlet system (25) have an identically embodied leadthrough (22).

3. The switchgear (10) of claim 2, **characterized in that** the leadthrough (22) has a cylindrical region (33), onto which the current transformer (SW) is slipped.

4. The switchgear (10) of one of claims 2 or 3, **characterized in that** the leadthrough (22) has a securing region (32), which is inserted through an opening in the outer-cone outlet system (20) or the inner-cone outlet system (25) and joined in gastight fashion thereto.

5. The switchgear (10) of one of claims 2 through 4, **characterized in that** in the outer-cone outlet system (20), a retaining plate or the like is provided with an opening, through which the leadthrough (22) is inserted.

6. The switchgear (10) of one of claims 2 through 4, **characterized in that** in the inner-cone outlet system (25), a U-shaped embodiment (28, 29) is provided, the legs (29) of which have both the opening belonging to the securing region (32) and a further opening, and the leadthrough (22) is inserted in gastight fashion through the further opening.

7. The switchgear (10) of one of claims 2 through 6, **characterized in that** the leadthrough (22) has a conical region (34), onto which an outer-cone cable plug can be slipped.

8. The switchgear (10) of one of claims 1 through 7, **characterized in that** the current transformer (SW) in the outer-cone outlet system (20) as well as in the inner-cone outlet system (25) is located outside the basic container (12) and thus in the open air.

## Revendications

1. Appareillage de commutation sous enveloppe métallique à isolation gazeuse (10), en particulier pour les applications moyenne tension, pourvu d'un contenant de base (12), d'un transformateur de courant (SW), et d'un système de sortie à cône extérieur (20) ou d'un système de sortie à cône intérieur (25), **caractérisé en ce que** le contenant de base (12) est pourvu d'une ouverture de montage et de sortie de câble (19), laquelle est fermée par le système de sortie à cône extérieur (20) ou par le système de sortie à cône intérieur (25), et **en ce que** le système de sortie à cône extérieur (20) et le système de sortie à cône intérieur (25) présentent un transformateur de courant (SW) de conception similaire.

2. Appareillage de commutation (10) selon la revendication 1, **caractérisé en ce que** le système de sortie à cône extérieur (20) et le système de sortie à cône intérieur (25) présentent une traversée (22) de conception identique.

3. Appareillage de commutation (10) selon la revendication 2, **caractérisé en ce que** le passage (22) présente une zone cylindrique (33) sur laquelle est fixé le transformateur de courant (SW).

4. Appareillage de commutation (10) selon l'une quelconque des revendications 2 ou 3, **caractérisé en ce que** la traversée (22) présente une zone de fixation (32), laquelle est introduite à travers une ouverture du système de sortie à cône extérieur (20) ou du système de sortie à cône intérieur (25) et reliée ce dernier de manière étanche au gaz.

5. Appareillage de commutation (10) selon l'une quelconque des revendications 2 à 4, **caractérisé en ce que** pour le système de sortie à cône extérieur (20), une tôle de retenue ou similaire est pourvue d'une ouverture à travers laquelle la traversée (22) est introduite.

6. Appareillage de commutation (10) selon l'une quelconque des revendications 2 à 4, **caractérisé en ce que** pour le système de sortie à cône intérieur (25), une formation en U (28, 29) est prévue, dont les branches (29) présentent l'ouverture associée à la zone de fixation (32) ainsi qu'une autre ouverture, la traversée (22) étant introduite de manière étanche au gaz à travers l'autre ouverture.

7. Appareillage de commutation (10) selon l'une quelconque des revendications 2 à 6, **caractérisé en ce que** la traversée (22) présente une zone conique (34) sur laquelle un connecteur de câble à cône extérieur peut être fixé.

8. Appareillage de commutation (10) selon l'une quelconque des revendications 1 à 7, **caractérisé en ce que** le transformateur de courant (SW), pour le système de sortie à cône extérieur (20), ainsi que pour le système de sortie à cône intérieur (25), se situe à l'extérieur du contenant de base (12) et donc dans l'air.
